# EUROPEAN PATENT APPLICATION

(11) **EP 4 603 531 A1**
(43) Date of publication of application: **20.08.2025**
(21) Application number: 24158331.9
(22) Date of filing: 19.02.2024
(51) Int. Cl.: C08J 11/08

(54) **RECOVERY OF POLYCARBONATE FROM WASTE**

(71) Applicant: Nederlandse Organisatie voor toegepast-natuurwetenschappelijk Onderzoek TNO, 2595 DA 's-Gravenhage (NL)
(72) Inventor: PRINS, Lucie, 2595 DA 's-Gravenhage (NL); VAN GOLEN-KWAKERNAAT, Lauran, 2595 DA 's-Gravenhage (NL); VAN KOL, Danny, 2595 DA 's-Gravenhage (NL); VAN DE RUNSTRAAT, Annemieke, 2595 DA 's-Gravenhage (NL); SVAVARSSON, Stymir, 2595 DA 's-Gravenhage (NL); HARKEMA, Stephan, 2595 DA 's-Gravenhage (NL); ROELANDS, Cornelius Petrus Marcus, 2595 DA 's-Gravenhage (NL)
(74) Representative: V.O.

(57) **Abstract**

The invention is directed to a method for at least partially separating and fractionating polycarbonate (PC) and acrylonitrile butadiene styrene (ABS) comprised in a plastic waste composition, wherein said method comprises at least a dissolution stage and a PC fractionating stage, wherein the dissolution stage comprises contacting the plastic waste composition with a solvent to dissolve the PC and the ABS in said solvent to obtain a PC-rich polymer solution; and wherein the PC fractionating stage comprises the fractionation of the PC to provide at least a first PC fraction and a second PC fraction which have different molecular weight distributions.

## Description

### BACKGROUND OF THE INVENTION

The invention is in the field of recycling plastic waste. In particular, the invention is directed to a method to separate and fractionate polycarbonate from plastic waste.

Recycling of plastic waste is a highly researched topic and may further aid in the development of a circular economy, *i.e.* a system of closed loops in which renewable sources are used and used materials lose their value as little as possible. After a product has reached its end-of-life, it is typically considered waste and at this point conventional recycling methods typically commence. The waste may be collected and sorted, wherein the sorting typically first comprises mechanical sorting by type of material (*e*.*g*. plastics, paper). Further downstream, the plastics are sorted by type of polymers, for instance by using infrared spectroscopy to obtain several mono streams. A mono stream ideally comprises one type of polymer or a plurality of similar types of polymers, for instance PET (polyethylene terephthalate), which facilitates the repurposing of the polymer.

Plastic waste comprising a mixture of polymers, such as blends of polycarbonate (PC) and one or more other polymers, are however particularly challenging to recycle. PC is a thermoplastic polymer that is very resistant to heat, chemicals and impact. It is often used in *i.a.* electronic applications, construction materials, and the automotive industry. To increase the scratch-resistance of PC, a coating may be applied. Examples of blends comprising PC include PC/acrylonitrile butadiene styrene (ABS) blends and PC/ high impact polystyrene (HIPS) blends. These blends typically occur in waste from electrical or electronic equipment, which is also referred to as e-waste. This stream is particularly hard to recycle, as the manufacturing of new products often demands pure ABS, HIPS or PC (*i.e.* without additives) to make a blend with the desired mechanical properties.

Methods are known in the prior art to separate polymers in polymer mono streams. For instance, WO 2022/255873 discloses a method to separate PC and a first-component such as ABS from plastic waste, based on nonselective dissolution and selective precipitation.

A further challenge in polymer recycling is that different parts of plastic waste, even when constituted by the same polymer type and present in the same plastic stream, can comprise polymers having different molecular weights. Thus, although a separation based on polymer type as described in WO 2022/255873 may give polymer streams that are each of a relatively high polymer purity, these streams generally exhibit high polydispersity (PD) indices, meaning that the molecular weight distribution over the polymers is high. This means that a follow-up step, for instance as described in EP0448082, may be needed to separate polymers with different molecular weight from each other.

It is an object of the present invention to provide a method to at least partially separate and fractionate PC and ABS directly from a plastic waste composition, without requiring a post-separation fractionation step. This is particularly challenging in view of the various components and impurities comprised in plastic waste.

### SUMMARY OF THE INVENTION

The present invention is directed to a method for at least partially separating and fractionating polycarbonate (PC) and acrylonitrile butadiene styrene (ABS) comprised in a plastic waste composition. Fractionation herein means that different fractions of high purity PC are obtained, each having a different weight-average molecular weight of PC.

Accordingly, the method of the present invention comprises at least a dissolution stage and a PC fractionating stage. The dissolution stage comprises contacting the plastic waste composition with a solvent to dissolve the PC and the ABS in said solvent in order to obtain a PC-rich polymer solution. The PC fractionating stage comprises at least the following steps:
- a first PC precipitation step comprising adding a weak anti-solvent in a first amount to the PC-rich polymer solution to precipitate part of the dissolved PC;
- a first PC separation step comprising separating the PC precipitate obtained in the first PC precipitation step from the PC-rich polymer solution to obtain a first PC fraction and a second PC-rich polymer solution;
- a second precipitation step comprising adding the weak anti-solvent in a second amount to the second PC-rich polymer solution to precipitate at least part of the remaining dissolved PC; and
- a second PC separation step comprising separating the PC precipitate obtained in the second precipitation step from the second PC-rich polymer solution to obtain a second PC fraction and a PC-lean polymer solution.

Following the fractionating stage, the method may further comprise an ABS recovery phase to recover the ABS from the PC-lean polymer solution.

### BRIEF DESCRIPTION OF THE DRAWING

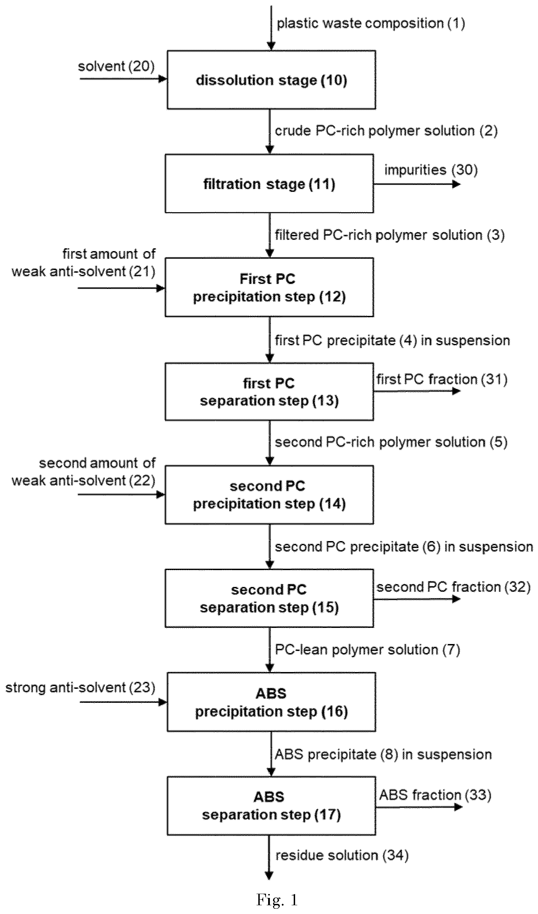

Figure 1 illustrates a flow scheme of a preferred embodiment of the present invention.

### DETAIL DESCRIPTION

The present invention is directed to a method for at least partially separating and fractionating polycarbonate (PC) and acrylonitrile butadiene styrene (ABS) comprised in a plastic waste composition. The method of the present invention comprises at least a dissolution stage and a PC fractionating stage. The dissolution stage comprises contacting the plastic waste composition with a solvent to dissolve the PC and the ABS in said solvent in order to obtain a PC-rich polymer solution. The PC fractionating stage comprises at least the following steps:
- a first PC precipitation step comprising adding a weak anti-solvent in a first amount to the PC-rich polymer solution to precipitate part of the dissolved PC;
- a first PC separation step comprising separating the PC precipitate obtained in the first PC precipitation step from the PC-rich polymer solution to obtain a first PC fraction and a second PC-rich polymer solution;
- a second PC precipitation step comprising adding the weak anti-solvent in a second amount to the second PC-rich polymer solution to precipitate at least part of the remaining dissolved PC; and
- a second PC separation step comprising separating the PC precipitate obtained in the second precipitation step from the second PC-rich polymer solution to obtain a second PC fraction and a PC-lean polymer solution.

The plastic waste may be subjected to a pre-treatment step before dissolving the PC and ABS in the solvent. This pre-treatment step may comprise *i.a.* further shredding and/or washing.

The plastic waste composition typically originates from e-waste and/or automotive scrap parts, preferably e-waste. E-waste is a general term used to describe all electrical or electronic waste. It includes categories such as, but not limited to, household appliances (*e*.*g*. microwave), consumer electronics (*e.g.* televisions) and lamps (*e.g.* LEDs). The method of the present invention is particularly suitable for e-waste according to the WEEE-directive of the European Union (2012/19/EU). PC and ABS are both typically used in electronics, construction material, automobile parts *etc.* PC for its resistance to heat, chemicals and impact, and ABS *i.a.* for its scratch resistance.

ABS is a thermoplastic polymer that may be manufactured by emulsion polymerization or mass polymerization, forming styrene-acrylonitrile (SAN) copolymer chains grafted on a polybutadiene backbone (E-ABS) or discrete rubber polybutadiene (PBR) particles with part of the SAN grafted on the particles and another part of the SAN occluded in the particles (M-ABS), respectively. The proportions of styrene, acrylonitrile and polybutadiene can be varied depending on the desired properties. If ABS is dissolved, the SAN copolymer typically separates from the polybutadiene. Accordingly, if ABS is dissolved, the SAN may be fully dissolved while the small polybutadiene particles may be dispersed in the solvent. In the content of the present invention, dissolution of ABS is also used to describe dissolved SAN with dispersed polybutadiene particles in the solvent. Similarly, recovery (incl. fractionation) of ABS as described herein, includes the recovery and fractionation of ABS and/or SAN.

The PC and ABS are typically present in a blend, *e*.*g*. in a miscible polymer blend.

Polymer blends can be broadly classified in three groups: immiscible polymer blends, compatible polymer blends and miscible polymer blends. Immiscible polymer blends may also be referred to as heterogeneous polymer blends. The polymers in these blends typically form separate phases and their corresponding individual glass transition temperatures may be observed. Compatible polymer blends are typically immiscible polymer blends that have macroscopically uniform physical properties due to sufficiently strong interactions between the polymers. Miscible polymer blends may also be considered homogeneous polymer blends and typically have a single-phase structure for which one glass-transition temperature may be observed. This invention is particularly suitable for miscible polymer blends comprising at least PC and ABS. In miscible blends, a polymer of the blend is typically only fully accessible to be dissolved if the other polymer of the blend is also dissolved and fully accessible to the solvent. Further, the method according to the present invention may be suitable for inaccessible blends. This is a term to describe a blend that is at least partially unreachable by a solvent, for instance due to an applied coating.

### Dissolution

The dissolution of the PC and the ABS according to the present invention is nonselective, meaning that both the PC and ABS are fully dissolved. The nonselective dissolution disrupts the cohesion and noncovalent bonds holding the polymers together in a blend. This typically provides a higher recovery yield and purity as essentially all components of the polymer blend are accessible and disassociated.

The PC and ABS are dissolved in a solvent, which may be performed at an elevated temperature (*i.e.* above 20 °C). A higher temperature typically accelerates the dissolution of the polymers. Accordingly, the plastic waste composition is preferably contacted with the solvent in the dissolution stage at a temperature in the range of 60 °C to 250 °C, preferably in the range of 70 to 130 °C such as about 100 °C. Depending on the solvent that is selected for the dissolution (*vide infra*), the dissolution may be performed at an elevated pressure to prevent boiling of the solvent. Accordingly, for example, the dissolution may be carried out at a pressure in the range of 1 to 10 bar, or higher.

The solvent is selected such that the PC and ABS are both soluble therein. Typical solvents include dichloromethane (DCM), cycloketones comprising a C₄ or larger ring (*i.e.* four or more carbon atoms), methyl isobutyl ketone (MIBK), tetrahydrofuran (THF), dimethylformamide (DMF), dimethylacetamide (DMAc), chloroform, benzaldehyde, aniline, 1,4-dioxane, ethylene chloride, N-methyl-2-pyrrolidone.

The solvents are further preferably allowed under the Registration, Evaluation, Authorization and Restriction of Chemicals (REACH) regulations, which is a regulation of the European Union adapted to improve the protection of human health and the environment from the risks of chemicals.

More specifically, the solvent is preferably selected from the group consisting of cyclopentanone, cyclohexanone and a combination thereof. It was surprisingly found that these solvents are particularly suitable to dissolve PC/ABS blends and may thus allow for separation with high purity and yields.

### Filtration

The plastic waste composition comprises, besides PC and ABS, further components, herein also referred to as impurities. Impurities that are typically found in plastic waste include, for example, one or more of metals, minerals, pigments, dyes, paints, glass, and polymers such as polyethylene (PE), polymethyl methacrylate (PMMA) and polyethylene terephthalate (PET). The solvent is preferably selected such that these impurities do essentially not dissolve in the solvent during the dissolution stage, such that they can be separated from the PC-rich polymer solution by solid/liquid separation techniques like filtrations. In addition, in embodiments wherein the ABS comprises insoluble polybutadiene rubber (PBR) particles, these particles may also be removed with the filtration. The PC-rich polymer solution before this solid/liquid separation is herein referred to as a crude PC-rich polymer solution, while the PC-rich polymer solution after this separation (wherein thus at least part of the impurities are removed) is herein referred to as a filtered PC-rich polymer solution.

Accordingly, in a preferred embodiment, the PC-rich polymer solution obtained from the dissolution stage is a crude PC-rich polymer solution comprising impurities and the method further comprises a filtration stage following the dissolution stage, said filtration stage comprising filtering the crude PC-rich polymer solution to remove at least part of these impurities and to obtain a filtered PC-rich polymer solution which is proceeded to the PC fractionation stage.

The filtration stage preferably comprises clarification of the crude PC-rich polymer solution, such that this solution become clearer, *i.e.* more transparent to light. This is advantageous when the method comprises light scattering to determining of the suitable amount of anti-solvent to be added (*vide infra*)*.* Light scattering is hampered by insoluble matter (*i.e.* matter that is not fully dissolved in the solvent) and as such, this matter is preferably substantially entirely removed in the filtration stage. Substantially entirely herein means that at least 90 wt% of the impurities are removed. Moreover, undissolved matter may be entrapped in the precipitated PC and/or ABS in one of the later stages, thereby contaminating the recovered PC and/or ABS.

Preferably, the non-soluble impurities are removed by filtration using a prepared filter bed comprising a filter and a filter aid. Such a filter is typically sufficient to remove all of the non-soluble fraction and allows for the PC and/or ABS to remain in the filtrate. Suitable filter aids include active carbon and/or diatomaceous earth such as Celite^{®}. Advantageously, filter aids may capture impurities such as pigments, dyes, paints, *etc.*, but also short-chained polycarbonates (despite the fact that the pores are sufficiently large for them to pass through) thereby improving the purity and polydispersity of the fractions. The filter aids may accordingly assist in decoloring the solution, as well as in improving the purification.

### Fractionation

The present method enables the recovery of PC fractions with different molecular weights by sequential precipitation and separation with increasing amounts of anti-solvent. Surprisingly, this is not negatively influenced by the presence of ABS and/or HIPS.

The term weak anti-solvent is herein used to indicate that it is an anti-solvent that in principle only allows PC to precipitate out of the polymer solution. It is well-known in the art that the addition of an anti-solvent can enhance the precipitation of a solute. The anti-solvent typically decreases the solubility of the solute and thus the solute is driven towards precipitating out of the polymer solution. Examples of suitable weak anti-solvents are lower ketones such as acetone, MIBK and methyl ethyl ketone (MEK). The term "lower", regarding the ketones, refers to the molecular weight of said ketones, which is preferably less than 200 g/mol, more preferably less than 150 g/mol.

After the first part of the dissolved PC has precipitated, the PC precipitate is separated from the remainder of the polymer solution to obtain a PC-rich fraction and a second PC-rich solution. The second PC-rich solution still contains PC, but less than the PC-rich polymer solution that entered to fractionation phase. Next, a further amount of weak anti-solvent is added to the second PC-rich solution to precipitate at least part of the remaining dissolved PC. In yet a further step, the PC precipitate obtained in the second precipitation step from the second PC-rich polymer solution to obtain a second PC fraction and a PC-lean polymer solution.

The fractionation stage comprises at least two precipitation and separations steps, but may contain additional precipitation and separations steps to obtained further PC fractions. Each of these additional precipitation and separation steps individually comprise adding the weak anti-solvent in a particular amount and subsequently separating the precipitated PC.

The amount of anti-solvent to be added in each precipitation step is influenced by the concentration of PC in the respective PC-rich polymer solution, the molecular weights of the PC polymeric molecules in solution, the amount of ABS, impurities, and the like. This may differ for each plastic waste composition batch. A suitable way to add an appropriate amount of weak anti-solvent comprises adding the weak anti-solvent while monitoring the PC-rich polymer solution for the occurrence of precipitation. Once initiation of precipitation is observed, addition of the weak anti-solvent can be ceased for that particular step. Monitoring can be carried out by eye, but also by techniques that allow automation such as optical sensing including light scattering and/or infra-red analysis, viscosity measurements, and the like.

Each precipitation step of the PC typically leads to the precipitates such as flakes and may be considered a solid or slurry. The PC is recovered by separation, for instance by substantially removing the solvent and the weak anti-solvent. The solvent and weak anti-solvent may be removed down to approximately 1-2% based on the total weight of the PC fraction. Removal thereof can be achieved by any means known in the art, such as evaporation or lyophilization. Additionally, the recovered PC may be processed further by for instance vacuum kneading, typically rendering the solvent and weak anti-solvent content to 0.1% or lower.

The first PC fraction comprises the PC with the highest weight-average molecular weight. The weight-average molecular weight of the further fractions decrease with each fraction that is provided. Thus, the PC in the first PC fraction has a higher weight-average molecular weight than the PC in the second PC fraction.

The PD index of the fraction *inter alia* depend on the total number of fractions that are produced. More factions lead to lower PD indices. When two or more fractions are produced, the PD index of the first PC fraction typically has a polydispersity (PD) index in the range of at most 3, preferably at most 2.5, most preferably at most 2. The PD index herein means the measure of the degree of the molecular weight distribution (MWD) of the polymer and is defined as Mw divided by Mn, where Mw is the weight-average molecular weight and Mn is the number-average molecular weight.

Advantageously, the present of ABS and optionally HIPS during the fractionation of PC dot not or only to a very a minimal extend lead to encapsulation of polybutadiene in the PC precipitate. The purities of each PC fraction is thus high and typically of at least 90%, preferably at least 95% based on the total weight of the particular fraction.

After all PC precipitation and separation steps have been carried out, the various PC fractions together with the PC-lean polymer solution is obtained. This PC-lean polymer solution at least still comprises the dissolved ABS. This ABS can be recovered in the subsequent ABS recovery phase.

### ABS recovery

Following the PC fractionating stage, the ABS recovery phase is preferably carried out. Depending on the type of ABS (*i.e.* E-ABS, M-ABS, or a mixture thereof) that was present in the plastic waste composition, the PC-lean polymer solution may contain the compounds ABS (typically E-ABS), SAN and polybutadiene, a combination thereof, SAN without polybutadiene or a combination of ABS and SAN without polybutadiene. The term ABS in the ABS recovery phase refers to all these compounds. In embodiments wherein the ABS comprises SAN, the recovered SAN can be recompounded with addition of virgin polybutadiene rubber to form ABS in a subsequent, separate, process.

In embodiments of the present invention, the plastic waste composition further comprises high impact polystyrene (HIPS). In these embodiments, the HIPS may be recovered together with the ABS in the ABS recovery phase. Similarly, other polystyrenics that were present in the plastic waste composition may be recovered in this phase. In a further embodiment, ABS may be separated from HIPS, for instance by using methylethylketone (MEK) as described in WO 2006/030020A1.

The ABS recovery phase comprises adding a strong anti-solvent to the PC-lean polymer solution to precipitate ABS and obtain an ABS precipitate.

To the PC-lean polymer solution, a strong anti-solvent is added. Strong anti-solvent is herein used to describe an anti-solvent that is capable of enhancing the precipitation of the ABS. The strong anti-solvent can be selected from a variety of solvents. Typically, the strong anti-solvent comprises lower ketones such as acetone and/or lower alcohols such as methanol, ethanol and/or propanol. Preferably, the strong anti-solvent comprises methanol and/or acetone. The term "lower", regarding the alcohols, refers to the molecular weight of said alcohols, which is preferably less than 150 g/mol, more preferably less than 100 g/mol, most preferably 60 g/mol or less.

It may be appreciated that the solvent, weak and/or strong anti-solvent can be identical. The function of the particular fluid (*i.e.* solvent, anti-solvents) may depend *i.a.* on the components in the plastic waste composition and the specific combination of used fluids. The specific combination of *e.g.* a solvent and a weak anti-solvent may alter the environment in such a manner that the affinity for the solution and the solubility of the ABS changes. Adding an amount of strong anti-solvent, *e*.*g*. an identical fluid to the weak anti-solvent, may then cause the ABS to precipitate, although this may not be the case while adding the first amount of the fluid as the weak anti-solvent. Accordingly, the function of the fluid may also depend on the amount of fluid used. A strong anti-solvent may thus function as a weak anti-solvent if dosed in a smaller amount.

The method according to the present invention may further comprise separating the ABS precipitate from the PC-lean polymer solution to obtain an ABS fraction and a residue solution. This residue solution may comprise the solvent and the strong anti-solvent. Further the residue solution may comprise the weak anti-solvent. Alternatively, the weak anti-solvent may be at least substantially removed from the PC-lean polymer solution before the addition of the strong anti-solvent. Removal of the weak anti-solvent before adding the strong anti-solvent may be favorable as this typically entails the separation of two liquids (*i.e.* the solvent and weak anti-solvent), which is a relatively minimal complex mixture.

Separating the ABS precipitate from the PC-lean polymer solution may for instance be performed by substantially removing the solvent, strong anti-solvent and optionally the weak anti-solvent, preferably up to purities exceeding 95% based on the total weight of the ABS.

Additionally, it may be preferred to separate the solvent, strong anti-solvent and/or weak anti-solvent from the residue solution, polycarbonate rich fraction and/or first-component rich fraction. This separation is preferably to the extent that each of the solvent, weak anti-solvent and/or strong anti-solvent may be recovered as individual streams that are suitable to be reused in the method. The separation and recovery may for instance be by distillation. In other words, the solvent may be recovered with a sufficiently high purity in order to be reused as solvent. In the recovered solvent, some impurities from *e*.*g*. anti-solvents are allowed, however the amount thereof should not compromise its function as solvent. Similarly, the weak anti-solvent and/or strong anti-solvents are each recovered in such high purities that these may fulfil the function as anti-solvent for a second or further cycle of the method according to the present invention. The method is accordingly preferably carried out in a closed loop system, that hardly requires the addition of additional solvent, weak anti-solvent and/or strong anti-solvent.

In a most preferred embodiment the ABS is present in a blend with the PC. In this most preferred embodiment the solvent comprises cyclopentanone, the weak anti-solvent comprises acetone and the strong anti-solvent comprises methanol. This typically allows for selective precipitation, fractionation and recovering of PC and the precipitation and recovery ABS with high purities and yields.

In a preferred embodiment, the ABS is also fractionated, similarly to the PC. This is particularly preferred in case the molecular weight distribution of the ABS is broad. It may be appreciated that ABS fractionation can be carried out similarly to the PC fractionation described herein, with the difference being the use of the strong anti-solvent. Hence, in a preferred embodiment of the present invention, the ABS recovery phase comprises fractionation of ABS, which comprises the steps of
- a first ABS precipitation step comprising adding the strong anti-solvent (21), which is an anti-solvent that allows ABS to precipitate out of the polymer solution, in a first amount to the PC-lean polymer solution (7) to precipitate part of the dissolved ABS;
- a first ABS separation step comprising separating the ABS precipitate obtained in the first ABS precipitation step from the PC-lean polymer solution to obtain a first ABS fraction and a second PC-lean polymer solution;
- a second ABS precipitation step comprising adding the strong anti-solvent in a second amount to the second PC-lean polymer solution to precipitate at least part of the remaining dissolved ABS;
- a second ABS separation step comprising separating the ABS precipitate obtained in the second ABS precipitation step from the second PC-lean polymer solution to obtain a second ABS fraction and an ABS-lean and PC-lean polymer solution.

It may further be appreciated that, the ABS recovery phase may, following the second ABS separation step, comprises one or more further ABS precipitation and separation steps that each individually comprise adding the strong anti-solvent in a particular amount and subsequently separating the precipitated ABS to obtain one or more further ABS fractions and the ABS-lean and PC-lean polymer solution.

### DETAILED DESCRIPTION OF THE FIGURE

Figure 1 illustrates an exemplary flow scheme of a preferred process according to the present invention. The plastic waste composition (1) is contacted with the solvent (20) in the dissolution stage (10) to provide the crude PC-rich polymer solution comprising the dissolved PC and ABS, as well as undissolved impurities. In a subsequent filtration stage (11), the impurities (30) are filtered off the solution to provide the filtered PC-rich polymer solution (3). To this solution 3, the first amount of the weak anti-solvent (21) is added, resulting in the precipitation of PC in the first PC precipitation step (12). This gives a first PC precipitate (4) in suspension, that can be separated in the first PC separation step (13) to give the first PC fraction (31) and the second PC-rich polymer solution (5). This solution 5 is continued in the second PC precipitation step (14), wherein the second amount of weak anti-solvent (22) is added to solution 5. This leads to further precipitation of PC, giving the second PC precipitate (6) in suspension which is subsequently subjected to the second PC separation step (15) to separate the second PC fraction (32) from the PC-lean polymer solution (7). This polymer solution 7 is continued in the ABS recovery stage, starting with addition of the strong anti-solvent (23) to precipitate at least part of the ABS in the ABS precipitation step (16) and giving a ABS precipitate (8) in suspension. The ABS fraction (33) can be obtained in an ABS separation step (17), to separate the ABS precipitation from the residue solution (34).

For the purpose of clarity and a concise description features are described herein as part of the same or separate embodiments, however, it will be appreciated that the scope of the invention may include embodiments having combinations of all or some of the features described.

### EXAMPLES

The present invention can be illustrated by the following nonlimiting examples.

### Example 1

One part of an IMSE (injection molded structural electronics) device no. 1 (33 g) was placed in a glass container together with 300 ml of cyclopentanone and heated in an oil bath to 100 °C. Within an hour, the device was fully dissolved. The crude PC-rich polymer solution was cooled down to a room temperature, filtered (Whatman paper filter) and undissolved residue and polymer solution collected. The residue was dried in the vacuum oven at 40 °C over the weekend. An active carbon was added to the polymer solution and stirred for 1h. 10g of Celite^{®} was added to the solution, mixed and filtered through a Celite^{®} bed made of 50 g Celite^{®}. The filtered PC-rich polymer solution was collected, the Celite^{®} bed rinsed with in total 200 ml cyclopentanone to recover any PC left in the Celite^{®}.

The polymer solution was precipitated by addition of ethanol. The precipitation was done sequentially using at first 80 ml of ethanol and followed with 30 ml increments. After each ethanol addition, the polymer solution was stirred for an hour and filtered through paper filter. Any precipitated polymer was collected and the recovered polymer solution further precipitated. Whole process was repeated until four fractions were collected. For the last fraction (no. 5), an excess of ethanol (200ml) was added to recover any PC still left in the solution. All recovered fractions were dried overnight in the vacuum oven at 40 °C and weighed. The products were analyzed by FTIR and consistent with PC.

A GPC measurement of all fractions was performed. The results are summarized in Table 1. For each fraction, a different molecular weight was measured, with the Mw decreasing in order from fraction 1 to fraction 5. It should be noted that fractions 1 and 2 have higher PD indices, *i.e.* broader molecular weight variations, than the other fractions. The IMSE device no. 1 comprises PC of two different Mw. The first two collected fractions correspond to the two original Mw of the device. The remaining three fractions can be assigned to *e*.*g*., oligomers that remain after the polymerisation but have lower than targeted Mw.

**Table 1**

| | **Weight (g)** | **% of total** | **Mn (g/mol)** | **Mw (g/mol)** | **Mz (g/mol)** | **PD index** |
|---|---|---|---|---|---|---|
| **IMSE device no. 1** | 33 | 100 | | | | |
| **Residue** | 0.591 | 1.8 | | | | |
| **PC fraction 1** | 10.294 | 63.5 | 23900 | 42600 | 63500 | 1.8 |
| **PC fraction 2** | 1.365 | 8.4 | 16800 | 24800 | 34600 | 1.5 |
| **PC fraction 3** | 0.446 | 2.8 | 9560 | 11800 | 14000 | 1.2 |
| **PC fraction 4** | 0.116 | 0.7 | 5790 | 6720 | 8240 | 1.2 |
| **PC fraction 5** | 0.07 | 0.4 | 3630 | 4010 | 4430 | 1.1 |
| **Total PC yield** | 12.291 | 75.8 | | | | |
| **Losses** | 3.914 | 24.2 | | | | |

### Example 2

An IMSE device no. 2 was used for the experiment aiming at PC recovery from the multicomponent sample, *i.e.* various types of PC, ABS, inks, and other materials. The device as analyzed by FTIR prior the dissolution experiment to verify its composition. FTIR analysis showed that both PC and ABS are present in the device.

The device was placed in a container and dissolved in cyclopentanone at 100 °C. The device was not fully submerged at the beginning of the dissolution but as the dissolution process progressed, all polymer parts were eventually in contact with the solvent and got dissolved. Only the metal part from inside the device remained undissolved, which was removed by solid/liquid separation.

The crude PC-rich solution was firstly filtered through a viscose 100 micron filter to collect a black-colored PC-rich polymer solution. Celite^{®} and active carbon were added to the polymer solution and after the filtration through the formed Celite^{®} bed, a clear yellow filtered PC-rich polymer solution was obtained. Acetone was added in small increments (2 ml) to the filtered PC-rich polymer solution to precipitate PC (at 160 ml acetone) while ABS remains in the solution. The first fraction of PC was filtered out and the remaining polymer solution was further precipitated by addition of acetone. All PC fractions were dried in vacuum oven overnight. Finally, the ABS fraction was precipitated by the addition of ethanol. All materials, first two fractions from acetone precipitation and last fraction after ethanol precipitation, were dried in vacuum oven, weighted and analyzed. The mass balance of the experiment can be found in Table 2.

**Table 2**

| | **Weight (g)** | **% of total** | **Mn (g/mol)** | **Mw (g/mol)** | **Mz (g/mol)** | **PD index** |
|---|---|---|---|---|---|---|
| **IMSE device no. 2** | 75.29 | 100 | | | | |
| **PC fraction 1** | 5.65 | 63.9 | 17.4 | 38.5 | 59.3 | 2.2 |
| **PC fraction 2** | 1.09 | 12.3 | 12.1 | 22.7 | 34.0 | 1.9 |
| **ABS fraction** | 0.38 | 4.3 | 4.1 | 6.4 | 8.5 | 1.5 |
| **Total PC yield** | 6.74 | 76.2 | | | | |
| **Losses** | 1.73 | 19.5 | | | | |

## Claims

1. Method for at least partially separating and fractionating polycarbonate (PC) and acrylonitrile butadiene styrene (ABS) comprised in a plastic waste composition (1), wherein said method comprises at least a dissolution stage(10) and a PC fractionating stage,
- wherein the dissolution stage (10) comprises contacting the plastic waste composition with a solvent (20) to dissolve the PC and the ABS in said solvent to obtain a PC-rich polymer solution; and
- wherein the PC fractionating stage comprises
- a first PC precipitation step (12) comprising adding a weak anti-solvent (21), which is an anti-solvent that essentially only allows PC to precipitate out of the polymer solution while the ABS essentially remains in solution, in a first amount to the PC-rich polymer solution (2) to precipitate part of the dissolved PC;
- a first PC separation step (13) comprising separating the PC precipitate (4) obtained in the first PC precipitation step (12) from the PC-rich polymer solution to obtain a first PC fraction (31) and a second PC-rich polymer solution (5);
- a second PC precipitation step (14) comprising adding the weak anti-solvent (22) in a second amount to the second PC-rich polymer solution (5) to precipitate at least part of the remaining dissolved PC;
- a second PC separation step (15) comprising separating the PC precipitate (6) obtained in the second PC precipitation step from the second PC-rich polymer solution to obtain a second PC fraction (32) and a PC-lean polymer solution (7).

2. Method according to claim 1, wherein the PC fractionating stage comprises, following the second PC separation step, one or more further precipitation and separation steps that each individually comprise adding the weak anti-solvent in a particular amount and subsequently separating the precipitated PC to obtain one or more further PC fractions and the PC-lean polymer solution.

3. Method according to any of the previous claims, wherein the method further comprises, following the PC fractionating stage, an ABS recovery phase which comprises adding a strong anti-solvent, which is an anti-solvent that is capable of enhancing the precipitation of ABS, to the PC-lean polymer solution (7) to precipitate ABS and obtain an ABS precipitate (8).

4. Method according to any of the previous claims, wherein the plastic waste composition further comprises high impact polystyrene (HIPS) and/or styrene-acrylonitrile (SAN).

5. Method according to any of the previous claims, wherein the plastic waste composition comprises a blend, preferably a miscible polymer blend of the PC and ABS.

6. Method according to any of the previous claims, wherein the solvent comprises one or more of dichloromethane (DCM), cycloketones comprising a C₄ or larger ring (*i.e.* four or more carbon atoms), methyl isobutyl ketone (MIBK), tetrahydrofuran (THF), dimethylformamide (DMF), dimethylacetamide (DMAc), chloroform, benzaldehyde, aniline, 1,4-dioxane, ethylene chloride, and N-methyl-2-pyrrolidone, preferably wherein the solvent comprises cyclopentanone and/or cyclohexanone.

7. Method according to any of the previous claims, wherein the weak anti-solvent comprise one or more lower ketones such as acetone, MIBK, and MEK.

8. Method according to claim 3, wherein the strong anti-solvent comprises one or more of methanol, ethanol, and propanol, including *n-*propanol and *i*-propanol.

9. Method according to any of the previous claims, wherein the PC-rich polymer solution obtained from the dissolution stage is a crude PC-rich polymer solution (2) comprising impurities and wherein the method further comprises a filtration stage (11) following the dissolution stage, said filtration stage comprising filtering the crude PC-rich polymer solution to remove at least part of these impurities (30) and to obtain a filtered PC-rich polymer solution (3) which is proceeded to the PC fractionation stage.

10. Method according to the previous claim, wherein the filtration stage comprises treatment of the crude PC-rich polymer solution (2) with active carbon and/or diatomaceous earth.

11. Method according to any of claims 9-10, wherein the impurities comprise one or more of metals, minerals, pigments, dyes, paints, glass, and polymers such as polyethylene (PE), polymethyl methacrylate (PMMA) and polyethylene terephthalate (PET).

12. Method according to any of the previous claims, wherein the plastic waste composition is contacted with the solvent in the dissolution stage (10) at a temperature in the range of 60 °C to 250 °C, preferably in the range of 70 to 130 °C such as about 100 °C.

13. Method according to any of the previous claims, wherein the first PC fraction (31) has a polydispersity (PD) index in the range of at most 3, preferably at most 2.5, most preferably at most 2.

14. Method according to any of the previous claims, wherein the first and second PC fractions (31, 32) each comprise PC, and wherein the PC in the first PC fraction (31) has a higher weight-average molecular weight than the PC in the second PC fraction (32).

15. Method according to any of the previous claims, wherein the first fraction (31) and/or second PC fraction (32) comprises PC in a purity of at least 90%, preferably at least 95% based on the total weight of the fraction.

16. Method according to claims 3, wherein the ABS precipitate (8) is separated to obtain an ABS fraction (34) comprising ABS in a purity of at least 80%, preferably at least 85%, even more preferably at least 95%, most preferably at least 98%, based on the total weight of the fraction.

17. Method according to any of the previous claims, wherein the plastic waste composition comprises e-waste and/or automotive scrap parts, preferably the plastic waste comprises e-waste, more preferably e-waste according to the WEEE-directive of the European Union (2012/19/EU).
